# EUROPÄISCHE PATENTSCHRIFT

(11) **EP 4 308 488 B1**
(45) Veröffentlichungstag und Bekanntmachung des Hinweises auf die Patenterteilung: **12.11.2025**
(21) Anmeldenummer: 22716883.8
(22) Anmeldetag: 18.03.2022
(51) Int. Cl.: B65G 17/42, B65G 17/06, F16G 13/00

(54) **KETTENGLIED SOWIE LASCHENKETTE UND KETTENFÖRDERER**
CHAIN LINK, PLATE-LINK CHAIN AND CHAIN CONVEYOR
MAILLON AINSI QUE CHAÎNE ARTICULÉE ET TRANSPORTEUR À CHAÎNE

(30) Priorität: 19.03.2021 DE 102021106744
(43) Veröffentlichungstag der Anmeldung: 24.01.2024
(73) Patentinhaber: Qlar Europe GmbH, 64293 Darmstadt (DE)
(72) Erfinder: SCHUETZ, Andreas, 64293 Darmstadt (DE); GOETZ, Stefan, 64293 Darmstadt (DE)
(86) Internationale Anmeldenummer: PCT/EP2022/057123
(87) Internationale Veröffentlichungsnummer: WO 2022/195061

(56) Entgegenhaltungen:
- DE-A1- 10 031 898
- JP-U- S60 137 716
- US-A- 4 518 077

## Beschreibung

Die vorliegende Offenbarung betrifft ein Kettenglied/eine Traglasche für eine Laschenkette eines Kettenförderers, insbesondere eines Plattenbandförderers, mit zwei im Wesentlichen plattenförmigen Seitenwänden/Laschen, die in einer Querrichtung (x-Richtung) des Kettenglieds zueinander parallel beabstandet angeordnet und fest miteinander verbunden sind, und zwei Krafteinleitungsbauteilen/Tragwinkeln, wobei jedes Krafteinleitungsbauteil von einer zugehörigen Seitenwand zur (eine Antriebskraft übertragenden) Befestigung an einem Förderband des Kettenförderers in der Querrichtung (x-Richtung) nach außen absteht und als von den Seitenwänden separates Bauteil ausgebildet ist. Ferner betrifft die vorliegende Offenbarung einen Laschenkette mit einer Vielzahl solcher Kettenglieder sowie einen Kettenförderer mit einer solchen Laschenkette.

Im Allgemeinen ist ein Kettenförderer ein Stetigförderer zum Transport von Stückgut oder Schüttgut. Die vorliegende Offenbarung ist insbesondere auf ein Kettenglied für eine Laschenkette eines Plattenbandförderers gerichtet. Solche Plattenbandförderer werden insbesondere im Schwerlastbereich der Schüttgutförderung eingesetzt, um große und/oder scharfkantige Schüttgüter zu befördern. Dabei weist der Plattenbandförderer eine Vielzahl von Förderplatten auf, die üblicherweise eine Breite von 800 mm bis 2000 mm und eine Länge von 100 mm bis 300 mm besitzen können. Die Förderplatten sind auf Schienen über (nicht angetriebene) Rollen gelagert, um das hohe Gewicht des Schüttguts aufnehmen zu können. Der Antrieb des Plattenbandförderers erfolgt über die Laschenkette, die eine Zugkraft in der Kettenumlaufrichtung über die Kettenglieder der Laschenkette auf die einzelnen Förderplatten überträgt und dadurch antreibt. Üblicherweise sind die Kettenglieder über Verbindungselemente, wie beispielsweise Schrauben, von unten an den einzelnen Förderplatten befestigt. Dazu dienen die Krafteinleitungsbauteile der Kettenglieder, die in Querrichtung von den Seitenwänden/(Haupt-)Laschen/Laschenkörpern des Kettenglieds abstehen und vorzugsweise ein Durchgangsloch aufweisen, über das die Kettenglieder an den einzelnen Platten angeschraubt werden können.

Im Allgemeinen sind solche Kettenglieder und Laschenketten mit solchen Kettengliedern bereits aus dem Stand der Technik bekannt.

Zum Beispiel offenbart die EP 1 236 661 A1 eine Kette in der Art einer Bolzenkette bekannt, wobei die Gelenkkette topfförmig ausgebildete Außenbuchsen, in denen jeweils ein Bolzenendabschnitt angeordnet ist, aufweist und als Förderkette für einen Zellenförderer dient, dessen aus der Kette und einer Vielzahl von an dieser in Reihe hintereinander befestigten Förderzellen bestehender, endloser Förderstrang um zwei an den Enden der Förderstrecke angeordnete Umlenkräder umläuft, von denen das eine angetrieben ist, und das andere als Spannrad fungiert. Die Kette weist eine Vielzahl paarweise mit gegenseitigem Querabstand parallel zueinander sowie zur Ketten-Längsachse und spiegelsymmetrisch zu dieser angeordneter Innenlaschen auf, die jeweils unter Bildung eines inneren Kettengliedes durch zwei rechtwinklig zur Ketten-Längsachse verlaufende Bolzen miteinander verbunden sind, welche sich jeweils durch die beiden ihnen zugeordneten Innenlaschen eines Laschenpaares erstrecken. Zudem weist die Kette zwei Außenlaschen mit im Wesentlichen L-förmigem Querschnitt auf, die jeweils zwei einander in Ketten-Längsrichtung benachbarte Innenlaschen zweier einander benachbarter innerer Kettenglieder gelenkig miteinander verbinden. Die Kette ist dabei mit den Förderzellen des Zellenförderers an deren Rückwand fest zu verbinden, wobei der parallel zu den Innenlaschen verlaufende eine Schenkel jeder Außenlasche von zwei einander benachbarten Bolzen zweier einander benachbarter innerer Kettenglieder durchsetzt ist, und der im Montagezustand parallel zur Außenseite der Rückwand der betreffenden Förderzelle verlaufende andere Schenkel durch Befestigungsmittel wie insb. Schraubverbindungen fest mit einer FörderzellenRückwand bzw. einer Halterungsplatte oder dergleichen zu verbinden ist, und wobei jeweils der mittlere Abschnitt eines Bolzens einen größeren Durchmesser aufweist als die beiden Bolzenendabschnitte. Demnach bilden die Außenlaschen der EP 1 236 661 A1 L-förmig nach außen gebogene Befestigungswinkel aus, durch die die Kette mit der Förderzellenrückwand verbunden werden kann.

Auch aus der EP 0 284 595 A1 ist beispielsweise eine Kette für einen Kettenförderer bekannt, mit in parallelen Ebenen angeordneten länglichen Kettengliedern, die durch Querbolzen miteinander verbunden sind, wobei je zwei benachbarte Querbolzen durch zwei in Abstand voneinander liegende Laschenpaare unter Bildung eines Laschengliedes miteinander verbunden sind und jedes Laschenpaar aus zumindest je einer Innenlasche und einer Außenlasche besteht, wobei benachbarte Laschenglieder durch unmittelbar mit den Innenseiten ihrer Gliedrundungen oder unter Zwischenschaltung von Lagermitteln an den Querbolzen der Laschenglieder angreifende Rund- bzw. Profilstahlglieder miteinander verbunden sind, wobei zwischen den Laschen eines Laschenpaares zumindest je ein Rundstahlglied angeordnet ist. Bei der in der EP 0 284 595 A1 offenbarten Kette sind die Außenlaschen als Winkellaschen ausgebildet, bei denen ein Steg an der Außenlaschen um 90° nach außen abgebogen ist.

Auch die DE 100 31 898 A1 zeigt eine Kette mit inneren und äußeren Kettengliedern, die zur äußeren Krafteinleitung Zusatzeinrichtungen aufweisen, die mittels vorspringender Bolzen gehalten werden. Der nach oben gerichtete Teil der Zusatzeinrichtung, der als Plattform bezeichnet wird und als Krafteinleitungsbauteil dient, weist ebenfalls eine Winkelform auf.

Weiterhin offenbart auch die JP S60-137 716 U Kettenglieder, die die Merkmale des Oberbegriffs des Anspruchs 1 aufweisen, mit Außenlaschen, die als Winkellaschen ausgebildet sind und die einen um 90° nach außen abgebogenen Steg besitzen.

Eine andere Ausführungsform von Kettenförderern mit Kettengliedern aus plattenförmigen Seitenteilen offenbart die US 4 518 077 A. Dort wird das Material mittels Mitnehmer transportiert, die wie Flügel von der zentral angeordneten Kette abstehen. Jeweils zwei der Mitnehmer, die integral mit einer Platte mit Befestigungsstiften verbunden sind, werden an jeweils einem Kettenglied angeordnet und sorgen nach ihrer Montage für die Fixierung der Kette.

Entscheidend bei den bisher bekannten Kettengliedern ist jedoch, dass die Herstellung ihres L-förmigen Querschnitts aus einer Seitenwand/einer Lasche und einem Krafteinleitungsbauteil/einem Tragwinkel die Schwachstelle der Kettenglieder bildet. Eine erste Möglichkeit zur Herstellung der Kettenglieder besteht darin, dass ein L-förmiger Tragwinkel/ein L-förmiges Krafteinleitungsbauteil an der zugehörigen Seitenwand durch Schweißen angebracht wird. Eine zweite Möglichkeit zur Herstellung der Kettenglieder besteht darin, dass ein Bereich jeder Seitenwand nach außen gebogen wird, um das nach außen abstehende Krafteinleitungsbauteil zu erzeugen.

Nachteilig daran ist jedoch zum einen, dass eine Schweißnaht oder eine Biegestelle nur eine begrenzte Festigkeit aufweisen, an der es zu einem Materialversagen, wie zu einem Bruch, kommen kann. Außerdem werden zur Steigerung der Festigkeit der Kettenglieder hochfeste Stähle verwendet, die beispielsweise durch entsprechende Wärmebehandlung eine erhöhte Bruchlast oder Zugsfestigkeit besitzen. Jedoch lassen sich solche hochfesten Stähle weder durch Schweißen verbinden noch zu einem L-förmigen Querschnitt biegen, da sie durch die Wärmebehandlung federelastische Eigenschaften erlangen, so dass eine Anbringung der Krafteinleitungsbauteile durch Schweißen und/oder Biegen/Abkanten nicht möglich ist.

Es ist also die Aufgabe der vorliegenden Offenbarung, die Nachteile aus dem Stand der Technik zu vermeiden oder wenigstens zu verringern. Insbesondere soll die Festigkeit eines Kettenglieds gesteigert werden, ohne dass ihre Funktionalität, insbesondere hinsichtlich ihrer Anbringung an einem Kettenförderer über Krafteinleitungsbauteile, beeinträchtigt wird.

Die Aufgabe wird durch ein Kettenglied mit den Merkmalen des Patentanspruchs 1 gelöst. Vorteilhafte Ausführungsformen sind in den Unteransprüchen beansprucht und werden nachfolgendend näher erläutert.

Genauer gesagt weist das Kettenglied zwei im Wesentlichen plattenförmige Seitenwände/Laschen auf, die in einer Querrichtung (x-Richtung) des Kettenglieds zueinander parallel beabstandet angeordnet und fest miteinander verbunden sind. Dabei entspricht die Querrichtung (x-Richtung) einer Richtung quer zu einer Kettenumlaufrichtung. Das Kettenglied kann beispielsweise als eine Innenlasche oder eine Außenlasche ausgebildet sein, wobei dies mit Bezug auf die Laschenkette später erläutert wird.

Vorzugsweise können die beiden Seitenwände über zwei in Längsrichtung (z-Richtung) des Kettenglieds, beabstandete Verbindungselemente fest miteinander verbunden sein. Dabei entspricht die Längsrichtung (z-Richtung) des Kettenglieds der Kettenumlaufrichtung. Insbesondere können die beiden Seitenwände des Kettenglieds über Bolzen oder Hülsen miteinander verbunden sein. Gemäß einer bevorzugten Ausführungsform kann ein als Innenkettenglied/Innenlasche ausgebildetes Kettenglied über Hülsen miteinander verbunden sein und ein als Außenkettenglied/Außenlasche ausgebildetes Kettenglied kann über Bolzen miteinander verbunden sein.

Das Kettenglied weist zwei Krafteinleitungsbauteile auf, wobei jedes Krafteinleitungsbauteil von einer zugehörigen Seitenwand zur Befestigung an einem Förderband des Kettenförderers, insbesondere den Plattenbändern des Plattenbandförderers, in der Querrichtung (x-Richtung) nach außen absteht. Insbesondere stehen die Krafteinleitungsbauteile jeweils rechtwinklig zur zugehörigen Seitenwand ab. Das heißt, dass ein erstes Krafteinleitungsbauteil von einer ersten Seitenwand in einer ersten Querrichtung (x-Richtung) nach außen weg ragt und ein zweites Krafteinleitungsbauteil von einer zweiten Seitenwand in einer zweiten Querrichtung (x-Richtung), die entgegengesetzt zu der ersten Querrichtung (x-Richtung) ist, nach außen weg ragt. Mit anderen Worten stehen die beiden Krafteinleitungsbauteile nach außen in eine von der jeweils anderen Seitenwand abgewandte Querrichtung (x-Richtung) hervor. Somit bildet jede Seitenwand zusammen mit dem Krafteinleitungsbauteil einen L-förmigen Querschnitt, d.h. einen Winkel, aus.

Vorzugsweise weist jedes Krafteinleitungsbauteil zumindest ein Befestigungsloch in einer Höhenrichtung (y-Richtung) des Kettenglieds auf, durch das das Kettenglied an den Förderplatten befestigbar ist. Insbesondere kann jedes Krafteinleitungsbauteil durch in der Höhenrichtung (y-Richtung) der Kettenglieder durchgreifende Verbindungselemente, wie Schrauben, an den Förderplatten befestigbar sein. Beispielsweise kann das Befestigungsloch einen rechteckigen Querschnitt aufweisen, so dass eine formschlüssig gegen Verdrehen gesicherte Anbringung des Krafteinleitungsbauteils über eine Schlossschraube oder dergleichen möglich ist.

Jedes Krafteinleitungsbauteil ist als ein von den Seitenwänden separates Bauteil ausgebildet. Das heißt, dass das Krafteinleitungsbauteil nicht durch Biegen eines Bereichs der Seitenwand (d.h. als integraler Bestandteil der Lasche) hergestellt ist. Dies hat den Vorteil, dass die Herstellbarkeit des Kettenglieds vereinfacht wird, da die separaten Bauteile mit einer einfacheren Geometrie ausgebildet werden können.

Die Krafteinleitungsbauteile sind im Wesentlichen plattenförmig ausgebildet. Das heißt, dass das Krafteinleitungsbauteil im Wesentlichen eben ausgebildet ist und somit beispielsweise aus einem Blechhalbzeug in einfacher Weise hergestellt werden kann. Somit lassen sich auch hochfeste Stähle als Krafteinleitungsbauteile verwenden, da keine Umformung notwendig ist.

Gemäß einem zentralen Aspekt der vorliegenden Offenbarung ist jedes Krafteinleitungsbauteil mit der zugehörigen Lasche, zumindest in der Längsrichtung (z-Richtung) des Kettenglieds, vorzugsweise in der Längsrichtung (z-Richtung) und einer Höhenrichtung (y-Richtung) des Kettenglieds, formschlüssig verbunden. Im Gegensatz zu bekannten Kettengliedern sind das Krafteinleitungsbauteil und die Seitenwand also nicht integral (durch Biegen) und nicht stoffschlüssig (durch Schweißen) miteinander verbunden, sondern über eine Formschlussverbindung zwischen den beiden Bauteilen. Über eine Formschlussverbindung können höhere Kräfte, die insbesondere in der Längsrichtung (z-Richtung) des Kettenglieds im Betrieb des Kettenförderers sehr hoch sind, als über eine stoffschlüssige Verbindung übertragen werden. Zudem wird über die formschlüssige Verbindung die sichere Verbindung der separat ausgebildeten Einzelteile gewährleistet.

Gemäß einer bevorzugten Ausführungsform kann jedes Krafteinleitungsbauteil einen Hauptkörper und einen von dem Hauptkörper abstehenden Zapfen aufweisen. Der Zapfen des Krafteinleitungsbauteils kann in eine vorzugsweise schlitzförmige Öffnung in der zugehörigen Seitenwand in der Querrichtung (x-Richtung) eingesteckt sein. Insbesondere kann die Öffnung als ein Durchgangsloch (in der Materialdickenrichtung der Lasche, die im montierten Zustand der Querrichtung (x-Richtung) des Kettenglieds entspricht) ausgebildet sein und der Zapfen durch die Seitenwand hindurchgreifend angeordnet sein. Das heißt, dass die Formschlussverbindung eine Steckverbindung ist, die in Querrichtung (x-Richtung) des Kettenglieds verbunden bzw. gelöst werden kann.

Gemäß einer Weiterbildung bevorzugten Ausführungsform können die beiden Krafteinleitungsbauteile in zueinander entgegengesetzte Richtungen der Querrichtung (x-Richtung) in die zugehörige Seitenwand eingesteckt sein. Das heißt, dass die Einsteckrichtung des ersten Krafteinleitungsbauteils entgegengesetzt zu der Einsteckrichtung des zweiten Krafteinleitungsbauteils ist. Vorzugsweise können die beiden Krafteinleitungsbauteile jeweils von außen in die zugehörige Seitenwand eingesteckt sein. Die entgegengesetzte Ausrichtung der beiden Einsteckrichtungen hat den Vorteil, dass zum Lösen der Steckverbindung des ersten Krafteinleitungsbauteils eine Relativbewegung zwischen dem ersten Krafteinleitungsbauteil und der zugehörigen Seitenwand erfolgen muss, die jedoch durch die Steckverbindung zwischen dem zweiten Krafteinleitungsbauteil und der zugehörigen Seitenwand unterbunden ist. Dadurch, dass die beiden Krafteinleitungsbauteile im Betrieb der Laschenkette fest mit den Förderplatten verbunden sind, ist es nicht möglich die beiden Krafteinleitungsbauteile zueinander zu bewegen, so dass sie gegenseitig ein Lösen aus der Steckverbindung verhindern.

Gemäß einer vorteilhaften Weiterbildung bevorzugten Ausführungsform können die Krafteinleitungsbauteile und die Seitenwände derart aufeinander abgestimmt sein, dass eine Einstecktiefe der Krafteinleitungsbauteile in die Seitenwände begrenzt ist. Mit anderen Worten kann an der Seitenwand ein Anschlag für das Krafteinleitungsbauteil vorgesehen sein, der die Position des Krafteinleitungsbauteils relativ zu der Seitenwand in der Querrichtung (x-Richtung), insbesondere in der jeweiligen Einsteckrichtung, formschlüssig begrenzt. Somit wird durch jedes Krafteinleitungsbauteil eine Relativbewegung zwischen dem Krafteinleitungsbauteil und der zugehörigen Seitenwand in ihrer Einsteckrichtung unterbunden, wobei durch die entgegengesetzte Ausrichtung der Einsteckrichtungen wiederum die Relativbewegung beider Seitenwände in jeder Einsteckrichtung, d.h. in der Querrichtung (x-Richtung) unterbunden ist. Somit ist in einem Zustand, in dem die Krafteinleitungsbauteile fest an den Plattenbändern montiert sind, eine Verlagerung der Seitenwände und der Krafteinleitungsbauteile zueinander in Querrichtung (x-Richtung) verhindert. Gleichzeitig ist die Montierbarkeit gegeben, da die Krafteinleitungsbauteile einfach von außen eingesteckt werden können, solange sie nicht beide an den Plattenbändern fest befestigt sind.

Gemäß der vorteilhaften Weiterbildung bevorzugten Ausführungsform kann der Zapfen einen geringeren Querschnitt als der Hauptkörper haben. Dies hat den Vorteil, dass der Hauptkörper einen Anschlagsfläche in der Querrichtung (x-Richtung) bildet, so dass die Einstecktiefe des Zapfens in der Einsteckrichtung begrenzt ist. Mit anderen Worten liegt der Hauptkörper des Krafteinleitungsbauteils an der Seitenwand an. So kann die Einstecktiefe auf besonders einfache Weise begrenzt werden.

Gemäß der vorteilhaften Weiterbildung bevorzugten Ausführungsform kann der Zapfen eine geringere Breite als der Hauptkörper des Krafteinleitungsbauteils haben. Somit liegt der Hauptkörper in seinem über die Breite des Zapfens überstehenden Bereich an der Seitenwand an. Somit wird eine Querschnittsreduzierung über die Breite und nicht über die Höhe des Zapfens gegenüber dem Hauptkörper realisiert, was den Vorteil hat, dass die Materialfestigkeit des Krafteinleitungsbauteils nur geringfügig geschwächt wird.

Gemäß einer Weiterbildung bevorzugten Ausführungsform kann die Erstreckung der Öffnung in einer Längsrichtung (z-Richtung) des Kettenglieds im Wesentlichen der Breite des Zapfens entsprechen. Somit sind das Krafteinleitungsbauteil und die Seitenwand in Längsrichtung (z-Richtung) spielfrei formschlüssig miteinander verbunden. Zusätzlich oder alternativ kann die Erstreckung der Öffnung in der Höhenrichtung (y-Richtung) des Kettenglieds im Wesentlichen der Dicke des Zapfens entsprechen. Somit sind das Krafteinleitungsbauteil und die Seitenwand in Höhenrichtung (y-Richtung) spielfrei formschlüssig miteinander verbunden. Vorzugsweise weisen die Öffnung und der Zapfen demnach im Wesentlichen den gleichen Querschnitt auf. Gemäß einer Weiterbildung bevorzugten Ausführungsform können der Zapfen und die Öffnung so aufeinander abgestimmt sein, dass der Zapfen werkzeuglos in die Öffnung eingesteckt und aus der Öffnung herausgezogen werden kann. Beispielsweise kann die Längserstreckung der Öffnung geringfügig, d.h. bis zu 1 mm, vorzugsweise maximal bis zu 0,5 mm, größer sein als die Breite des Zapfens. Mit anderen Worten bilden die Öffnung und der Zapfen eine lose Steckverbindung, die manuell/per Hand/werkzeuglos gefügt und getrennt werden kann. Dabei sind die Querschnitte so aufeinander abgestimmt, dass die Seitenwand und das Krafteinleitungsbauteil in Längsrichtung im Wesentlichen fest miteinander durch die Steckverbindung verbunden sind, aber die Steckverbindung in Querrichtung (x-Richtung) (leicht) lösbar ist.

Gemäß einer Weiterbildung bevorzugten Ausführungsform können die Kanten der Öffnung und des Zapfens ausgerundet sein, um Spannungsspitzen und daraus resultierende Rissbildung bei Verformung unter Last zu verhindern.

Gemäß einer Weiterbildung bevorzugten Ausführungsform kann in dem Zapfen eine erste Transportsicherungsöffnung ausgebildet sein, in die ein erstes Sicherungselement zur temporären Befestigung des Krafteinleitungsbauteils an der zugehörigen Seitenwand so einsteckbar ist, dass das erste Sicherungselement Material der zugehörigen Seitenwand entgegen der Einsteckrichtung des Zapfens hintergreift. Das erste Sicherungselement kann vorzugsweise als ein Spannstift oder Spannhülse ausgebildet sein. Die Krafteinleitungsbauteile werden erst über ihre Befestigung an den Förderplatten von Herausfallen in der Querrichtung (x-Richtung gehindert. Während des Transports oder im von den Förderplatten getrennten Zustand können sie sich aus der Steckverbindung lösen. Um das Lösen während eines Transports zu vermeiden, kann der Zapfen über das Sicherungselement daran gehindert werden, entgegen seiner Einsteckrichtung aus der Öffnung herauszufallen.

Gemäß einer bevorzugten Ausführungsform kann das Kettenglied je Krafteinleitungsbauteil einen Abstandshalter aufweisen, der auf dem Krafteinleitungsbauteil, insbesondere dem Hauptkörper des zugehörigen Krafteinleitungsbauteils, aufliegt und bündig mit einer Oberkante der zugehörigen Seitenwand in einer Höhenrichtung (y-Richtung) des Kettenglieds abschließt und/oder eine äußerste Kante des Kettenglieds bildet. Dies hat den Vorteil, dass das Krafteinleitungsbauteil, der aufgrund der formschlüssigen Befestigung in der Höhenrichtung (y-Richtung) von Material der Seitenwand in Höhenrichtung (y-Richtung) umgeben sein muss, durch den Abstandshalter mit den Förderplatten in Höhenrichtung (y-Richtung) verspannt werden kann. Somit wird kein Moment auf die Verbindung zwischen dem Krafteinleitungsbauteil und der Seitenwand beim Befestigen des Krafteinleitungsbauteils an den Förderplatten erzeugt.

Insbesondere kann der Abstandshalter zumindest eine Befestigungsöffnung aufweisen, die vorzugsweise als Durchgangsloch ausgebildet ist und mit dem Befestigungsloch des Krafteinleitungsbauteils fluchtend angeordnet ist und deren Querschnitt zumindest so groß wie der Querschnitt des Befestigungslochs des Krafteinleitungsbauteils ist. Dies hat den Vorteil, dass die Verbindungselemente zum Befestigen des Kettenglieds an den Förderplatten einfach durch die Abstandshalter hindurchgeführt und somit mitbefestigt werden können.

Gemäß der bevorzugten Ausführungsform kann der Abstandshalter im Wesentlichen plattenförmig sein und die Dicke des Abstandshalters kann im Wesentlichen der Dicke des Krafteinleitungsbauteils entsprechen. Dies hat den Vorteil, dass der Abstandshalter und das Krafteinleitungsbauteil aus demselben Blech hergestellt werden können. Zudem lässt sich so eine besonders einfache Form eines Abstandshalters wählen.

Gemäß der bevorzugten Ausführungsform können der Abstandshalter und das Krafteinleitungsbauteil zueinander fluchtende zweite Transportsicherungsöffnungen aufweisen, in die ein zweites Sicherungselement zur temporären Befestigung des Abstandshalters an dem Krafteinleitungsbauteil einsteckbar ist. Die zweite Transportsicherungsöffnung des Abstandshalters und/oder die zweite Transportsicherungsöffnung des Krafteinleitungsbauteils können/kann vorzugsweise als ein Durchgangsloch ausgebildet sein. Das zweite Sicherungselement kann vorzugsweise als ein Spannstift oder Spannhülse ausgebildet sein. Das heißt also, dass die Abstandshalter nur lose auf den Krafteinleitungsbauteilen aufliegen und erst über die Befestigung des Kettenglieds an den Förderplatten an den Krafteinleitungsbauteilen befestigt werden. Ohne diese können sie sich während des Transports oder im von den Förderplatten getrennten Zustand lösen. Um das Lösen während eines Transports zu vermeiden, kann der Abstandshalter über das zweite Sicherungselement daran gehindert werden, von den Krafteinleitungsbauteilen herunterzurutschen.

Gemäß einer bevorzugten Ausführungsform können die Seitenwände und die Krafteinleitungsbauteile aus einem Stahl bestehen, der eine Materialfestigkeit von 700 N/mm² bis 1600 N/mm² besitzt. Dies hat den Vorteil, dass das Kettenglied eine erhöhte Festigkeit besitzt.

Die vorliegende Erfindung betrifft auch eine Laschenkette gemäß Anspruch 10 für einen Kettenförderer, mit einer Vielzahl der beschriebenen Kettengliedern, wobei eine erste Anzahl der Kettenglieder als Innenlaschen ausgebildet sind, eine zweite Anzahl der Kettenglieder als Außenlaschen ausgebildet sind, die Innenlaschen und die Außenlaschen in einer Kettenumlaufrichtung abwechselnd angeordnet sind, in der Kettenumlaufrichtung benachbarte Innenlaschen und Außenlaschen gelenkig miteinander verbunden sind, und die Seitenwände der Innenlaschen in der Querrichtung (x-Richtung) zwischen den Seitenwänden der Außenlaschen angeordnet sind.

Die vorliegende Erfindung betrifft auch einen Kettenförderer gemäß Anspruch 11, insbesondere Plattenbandförderer, mit einer beschriebenen Laschenkette und einer Vielzahl an Plattenbändern, die über die Laschenkette in der Kettenumlaufrichtung antreibbar sind und an denen die Kettenglieder über die Krafteinleitungsbauteile in einer Höhenrichtung (y-Richtung) der Kettenglieder durchgreifende Verbindungselemente befestigt sind.

Mit anderen Worten betrifft die Offenbarung ein Kettenglied für eine Laschenkette/Kette, bei der sowohl das Risiko eines Bauteilversagens durch Rissbildung in einer Kantung sowie das Risiko des Bauteilversagen durch Rissbildung bedingt durch eine Schweißnaht ausgeschlossen sind als auch reduzierte Herstellkosten aufweist, da die Komplexität der Kettenglieder reduziert und die Toleranz gegenüber Montagefehlern erhöht wird. Somit können die Gefahren eines Frühausfalls der Kette und die damit verbundenen Kosten eliminiert und die Standzeit der Kette verbessert werden. Diese Effekte werden durch eine Laschenkette mit Krafteinleitungsbauteilen/Tragwinkel erreicht, bei welcher das Krafteinleitungsbauteil bzw. das Kettenglied so gestaltet ist, dass die Verbindung über einen Schlitz in der Seitenwand erfolgt, in den das Krafteinleitungsbauteil mit einem Zapfen eingesteckt wird. Dabei entsteht der Schlitz in der seitlichen Seitenwand der Kette in einer Verlängerung der Seitenwand nach oben (y-Richtung). Das Kettenglied besitzt eine zapfenförmige Verlängerung, die in den Schlitz der Seitenwand eingeschoben wird, wobei die Geometrie von Zapfen und Schlitz so gewählt sind, dass eine leicht klemmende, aber von Hand zu fügende Verbindung entsteht. Die Kanten der Schlitzgeometrie und der Zapfengeometrie können ausgerundet sein, um Spannungsspitzen und daraus resultierend Rissbildung bei Verformung unter Last zu verhindern. Eine Lasche/Innen- bzw. eine Außenlasche der Kette und deren zugeordnetes Krafteinleitungsbauteil haben eine symmetrische Geometrie, wobei die Krafteinleitungsbauteile unterschiedlich lang sind. Um bei der Montage der Baugruppe eine Verwechslung zu vermeiden und eine einfache Zuordnung zu ermöglichen, können die Krafteinleitungsbauteile ein Konturmerkmal zur Indizierung aufweisen. Das Krafteinleitungsbauteil kann eine SicherungNerriegelung mit einem Spannstift oder Spannhülse haben, um das Herausfallen des Krafteinleitungsbauteils während Transport und Montagevorgängen der losen Steckverbindung zwischen der Seitenwand und dem Krafteinleitungsbauteil zu verhindern. Somit kann ein Risiko von Verformungsrissen aufgrund der Biegung oder Kantung der Bleche und Schweißnahtbrüchen bei Last-induzierter Verformung vollständig eliminiert und damit die Haltbarkeit und Zuverlässigkeit der Laschenkette wesentlich verbessert werden.

Die Erfindung wird nachfolgend mit Hilfe von Zeichnungen erläutert. Es zeigen:
Fig. 1 eine perspektivische Darstellung zweier gelenkig miteinander verbundener, offenbarungsgemäßer Kettenglieder für eine Laschenkette,
Fig. 2 eine perspektivische Darstellung einer Lasche, eines daran befestigten Krafteinleitungsbauteils und eines Abstandshalters, die einen Teil eines offenbarungsgemäßen Kettenglieds bilden,
Fig. 3 eine perspektivische Darstellung der Lasche, des daran befestigten Krafteinleitungsbauteils und des Abstandshalters aus Fig. 2, wobei die Seitenwand transparent dargestellt ist,
Fig. 4 eine perspektivische Darstellung der Lasche, des daran befestigten Krafteinleitungsbauteils und des Abstandshalters aus Fig. 2, wobei die Seitenwand und der Abstandshalter transparent dargestellt sind, und
Fig. 5 eine Seitenansicht eines Teils eines Plattenbandförderers mit der Laschenkette.

Die Figuren sind lediglich schematischer Natur und dienen ausschließlich dem Verständnis der Erfindung. Die gleichen Elemente sind mit denselben Bezugszeichen versehen.

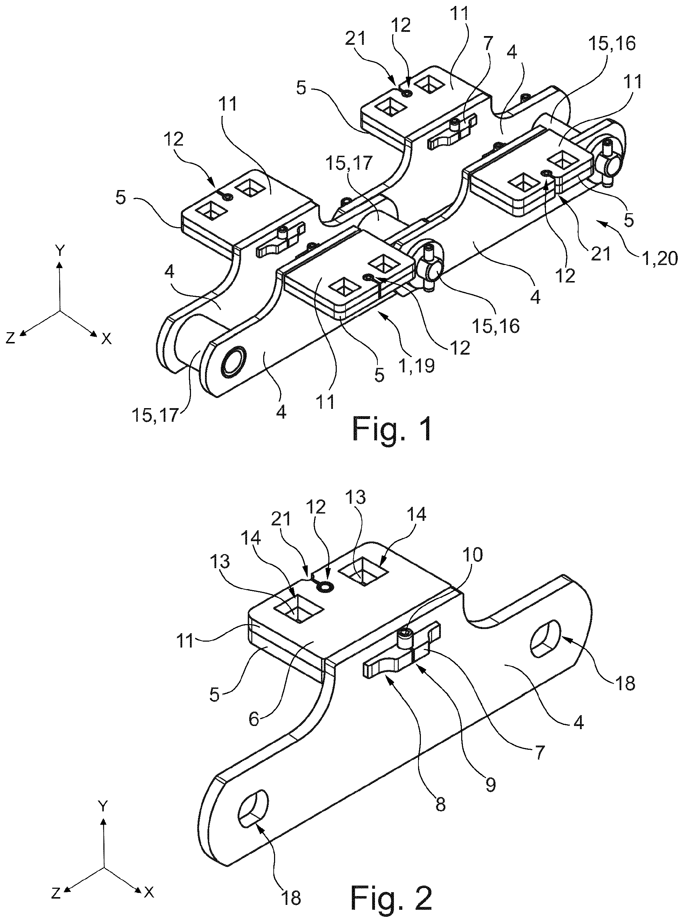

Fig. 1 zeigt zwei Kettenglieder 1 für eine Laschenkette 2 eines Kettenförderers, insbesondere eines Plattenbandförderers 3. Im Folgenden wird der Aufbau eines Kettenglieds 1 mit Bezug auf Fig. 1 sowie auf Fig. 2 bis 4, die einen Teil eines solchen Kettenglieds 1 zeigen, beschrieben.

Das Kettenglied 1 weist zwei im Wesentlichen plattenförmige Seitenwände/Laschen 4 auf, die auch als eine erste Seitenwand 4 und eine zweite Seitenwand 4 bezeichnet werden können und die in einer Querrichtung (x-Richtung) des Kettenglieds 1 zueinander parallel beabstandet angeordnet und fest miteinander verbunden sind. Dabei entspricht die Querrichtung (x-Richtung) des Kettenglieds 1 einer Richtung quer zu einer Kettenumlaufrichtung. Somit entspricht eine Längsrichtung (z-Richtung) des Kettenglieds 1 der Kettenumlaufrichtung. Jede Seitenwand 4 kann einen symmetrischen Aufbau haben. Die Seitenwände 4 eines Kettenglieds 1 können als Gleichteile ausgebildet sein.

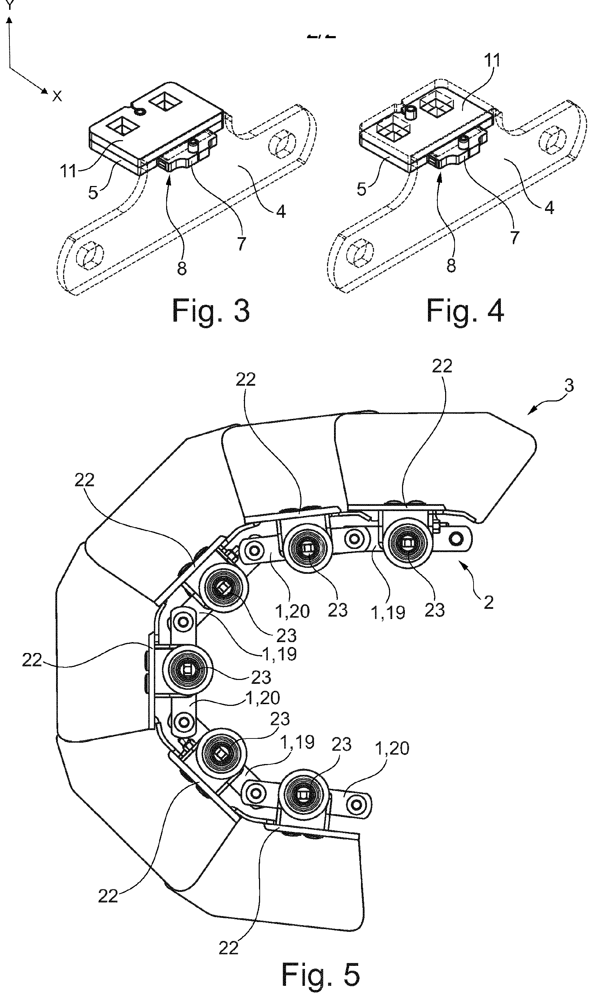

Das Kettenglied 1 weist zwei im Wesentlichen plattenförmige Krafteinleitungsbauteile 5 auf. Die Krafteinleitungsbauteile 5 stehen von einer zugehörigen Seitenwand 4 in der Querrichtung (x-Richtung) nach außen ab. Insbesondere stehen die Krafteinleitungsbauteile 5 jeweils rechtwinklig zur zugehörigen Seitenwand 4 ab. Jedes Krafteinleitungsbauteil 5 kann einen symmetrischen Aufbau haben. Die Krafteinleitungsbauteile 5 eines Kettenglieds 1 können als Gleichteile ausgebildet sein. Die Krafteinleitungsbauteile 5 dienen zur Befestigung an einem Förderband des Kettenförderers, insbesondere von Förderplaten des Plattenbandförderers 3, was später mit Bezug auf Fig. 5 erläutert wird. Die zwei Krafteinleitungsbauteile 5 können auch als ein erstes Krafteinleitungsbauteil 5 und ein zweites Krafteinleitungsbauteil 5 bezeichnet werden. Somit steht das erste Krafteinleitungsbauteil 5 von der ersten Seitenwand 4 in der Querrichtung (x-Richtung) nach außen ab und das zweite Krafteinleitungsbauteil 5 steht von der zweiten Seitenwand 4 in der Querrichtung (x-Richtung) nach außen ab. Demzufolge stehen die Krafteinleitungsbauteile 5 in entgegengesetzte Richtung von den Seitenwänden 4 ab, d.h. nach außen in eine von der jeweils anderen Seitenwand 4 abgewandte Querrichtung (x-Richtung) ab. Somit steht das erste Krafteinleitungsbauteil 5 von der ersten Seitenwand 4 in einer ersten Querrichtung (x-Richtung) ab und das zweite Krafteinleitungsbauteil 5 steht von der zweiten Seitenwand 4 in einer zweiten Querrichtung (x-Richtung) ab, die entgegengesetzt zu der ersten Querrichtung (x-Richtung) ist. Mit anderen Worten bildet jeweils eine der Seitenwände 4 mit einem des Krafteinleitungsbauteile 5 einen L-förmigen Querschnitt aus.

Die Krafteinleitungsbauteile 5 sind separat von den Seitenwänden 4 ausgebildet. Das heißt, dass jedes Krafteinleitungsbauteil 5 als ein von den Laschen 4 separates Bauteil ausgebildet ist. Zur Bildung des Kettenglieds 1 sind die Krafteinleitungsbauteile 5 jeweils mit einer der Laschen 4 verbunden. Das heißt, dass die erste Seitenwand 4 mit dem ersten Krafteinleitungsbauteil 5 verbunden ist und die zweite Seitenwand 4 mit dem zweiten Krafteinleitungsbauteil 5 verbunden ist.

Gemäß der vorliegenden Offenbarung sind die Krafteinleitungsbauteile 5 mit der zugehörigen Seitenwand 4 zumindest in der Längsrichtung des Kettenglieds 1, vorzugsweise in der Längsrichtung (z-Richtung) und einer Höhenrichtung (y-Richtung) des Kettenglieds 1, formschlüssig verbunden. Im Gegensatz zu bekannten Kettengliedern sind bei des Kettenglieds 1 die Krafteinleitungsbauteile 5 und die Seitenwände 4 also nicht integral (durch Biegen) und nicht stoffschlüssig (durch Schweißen) miteinander verbunden, sondern über eine Formschlussverbindung zwischen den beiden Bauteilen.

Vorzugsweise kann jedes Krafteinleitungsbauteil 5 einen Hauptkörper 6 und einen von dem Hauptkörper 6 abstehenden Zapfen 7 aufweisen. Der Zapfen 7 des Krafteinleitungsbauteils 5 kann in eine vorzugsweise schlitzförmige Öffnung 8 in der zugehörigen Seitenwand 4 in der Querrichtung (x-Richtung) eingesteckt sein/in die Öffnung 8 der Seitenwand 4 eingreifen. Insbesondere kann die Öffnung 8 als ein Durchgangsloch ausgebildet sein und der Zapfen 7 durch die Seitenwand 4 hindurchgreifend angeordnet sein. Das heißt, dass die Formschlussverbindung eine Steckverbindung ist, die in Querrichtung (x-Richtung) des Kettenglieds 1 verbunden bzw. gelöst werden kann.

Vorzugsweise können die beiden Krafteinleitungsbauteile 5 in zueinander entgegengesetzte Richtungen der Querrichtung (x-Richtung) jeweils in die zugehörige Seitenwand 4 eingesteckt sein. Das heißt, dass eine Einsteckrichtung des ersten Krafteinleitungsbauteils 5 in die erste Seitenwand 4 entgegengesetzt zu der Einsteckrichtung des zweiten Krafteinleitungsbauteils 5 in die zweite Seitenwand 4 ist. Vorzugsweise können die beiden Krafteinleitungsbauteile 5 jeweils von außen in die zugehörige Seitenwand 4 eingesteckt sein.

Insbesondere können die Krafteinleitungsbauteile 5 und die Seitenwände 4 derart aufeinander abgestimmt sein, dass eine Einstecktiefe der Krafteinleitungsbauteile 5 in die Seitenwände 4 begrenzt ist. An der Seitenwand 4 kann ein Anschlag für das eingesteckte Krafteinleitungsbauteil 5 vorgesehen/gebildet sein, der die Position des Krafteinleitungsbauteils 5 relativ zu der Seitenwand 4 in der Querrichtung (x-Richtung), insbesondere in der jeweiligen Einsteckrichtung, formschlüssig begrenzt. Beispielsweise kann der Zapfen 7 (sowie die Öffnung 8) einen geringeren Querschnitt als der Hauptkörper 6 haben. Somit liegt der Hauptkörper 6 des Krafteinleitungsbauteils 5 im eingesteckten Zustand des Krafteinleitungsbauteils 5 (d.h. wenn der Zapfen 7 in die Öffnung 8 eingreift/diese durchgreift) an der Seitenwand 4 an. Vorzugsweise kann der Zapfen 7 eine geringere Breite als der Hauptkörper 6 des Krafteinleitungsbauteils 5 haben. Dadurch liegt der Hauptkörper 6 in seinem über die Breite des Zapfens 7 überstehenden Bereich an der Seitenwand 4 an.

Insbesondere kann die Erstreckung der Öffnung 8 in der Längsrichtung (z-Richtung) des Kettenglieds 1 im Wesentlichen der Breite des Zapfens 7 entsprechen. Somit sind das Krafteinleitungsbauteil 5 und die Seitenwand 4 in Längsrichtung (z-Richtung) spielfrei formschlüssig miteinander verbunden. Beispielsweise kann die Erstreckung der Öffnung 8 in der Höhenrichtung (y-Richtung) des Kettenglieds 1 im Wesentlichen der Dicke des Zapfens 7 entsprechen. Somit sind das Krafteinleitungsbauteil 5 und die Seitenwand 4 in Höhenrichtung (y-Richtung) spielfrei formschlüssig miteinander verbunden. Vorzugsweise weisen die Öffnung 8 und der Zapfens 7 demnach im Wesentlichen den gleichen Querschnitt auf.

Vorzugsweise können der Zapfen 7 und die Öffnung 8 so aufeinander abgestimmt sein, dass der Zapfen 7 werkzeuglos in die Öffnung 8 eingesteckt und aus der Öffnung 8 herausgezogen werden kann. Beispielsweise ist die Längserstreckung (z-Richtung) der Öffnung geringfügig, d.h. 0 bis 1 mm, bevorzugt 0 bis 0,5 mm, größer als die Zapfenbreite, um eine lose Steckverbindung, die manuell/per Hand/werkzeuglos gefügt und getrennt werden kann, zu bilden. Insbesondere können die Kanten der Öffnung 8 und des Zapfens 7 ausgerundet sein.

Vorzugsweise kann in dem Zapfen 7 eine erste Transportsicherungsöffnung 9 ausgebildet sein. In die erste Transportsicherungsöffnung 9 kann ein erstes Sicherungselement 10 zur temporären Befestigung des Krafteinleitungsbauteils 5 an der zugehörigen Seitenwand 4 so einsteckbar sein, dass das erste Sicherungselement 10 Material der zugehörigen Seitenwand 4 entgegen der Einsteckrichtung des Zapfens 8 hintergreift. Beispielsweise kann das erste Sicherungselement 10 kann als ein Spannstift oder Spannhülse ausgebildet sein. Die erste Transportsicherungsöffnung 9 kann als ein Durchgangsloch ausgebildet sein. Vorzugsweise kann der Zapfen 7 geschlitzt ausgebildet sein, wobei ein vorzugsweise in der Querrichtung (x-Richtung) des Kettenglieds 1 ausgerichteter Schlitz eine Außenkante mit der ersten Transportsicherungsöffnung 9 verbindet. Dadurch kann das erste Sicherungselement 10 einfacher eingesteckt werden. Zudem kann der Zapfen 7 durch das erste Sicherungselement 10 in der Längsrichtung (z-Richtung) des Kettenglieds 1 nach außen aufgespannt werden, um den Zapfen 7 in der Öffnung 8 zu verspannen.

Vorzugsweise kann das Kettenglied 1 je Krafteinleitungsbauteil 5 einen Abstandshalter 11 aufweisen. Das heißt, dass das Kettenglied 1 einen ersten Abstandshalter 11 für das erste Krafteinleitungsbauteil 5 und einen zweiten Abstandshalter 11 für das zweite Krafteinleitungsbauteil 5 hat. Die Abstandshalter 11 liegen auf dem zugehörigen Krafteinleitungsbauteil 5 auf. Insbesondere liegen die Abstandshalter 11 auf dem Hauptkörper 6 des zugehörigen Krafteinleitungsbauteils 5 auf. Die Abstandshalter 11 schließen bündig mit einer Oberkante der zugehörigen Seitenwand 4 in der Höhenrichtung (y-Richtung) des Kettenglieds 1 ab und/oder bilden eine äußerste Kante (in y-Richtung) des Kettenglieds 1. In der dargestellten Ausführungsform schließen die Abstandshalter 11 bündig mit der Oberkante der jeweiligen Seitenwand 4 ab. Das heißt, dass eine Dicke der Abstandshalter 11 einem Abstand (in y-Richtung) zwischen der Oberkante der Seitenwand 4 und einer Oberkante der Öffnung 8 in der Seitenwand 4 entspricht. Insbesondere kann der Abstandshalter 11 im Wesentlichen plattenförmig sein. Zudem kann die Dicke des Abstandshalters im Wesentlichen der Dicke des Krafteinleitungsbauteils 5 entsprechen.

Vorzugsweise können der Abstandshalter 11 und das Krafteinleitungsbauteil 5 zueinander fluchtende zweite Transportsicherungsöffnungen 12 aufweisen. In den zweiten Transportsicherungsöffnungen 12 kann ein zweites Sicherungselement zur temporären Befestigung des Abstandshalters 11 an dem Krafteinleitungsbauteil 5 einsteckbar sein. Die zweite Transportsicherungsöffnung 12 des Abstandshalters 11 und/oder des Krafteinleitungsbauteils 5 kann beispielsweise als ein Durchgangsloch ausgebildet sein. Das zweite Sicherungselement kann beispielsweise als ein Federstift ausgebildet sein. Vorzugsweise können/kann der Abstandshalter 11 und/oder das Krafteinleitungsbauteil 5 geschlitzt ausgebildet sein, wobei ein vorzugsweise in der Querrichtung (x-Richtung) des Kettenglieds 1 ausgerichteter Schlitz eine Außenkante mit der zweiten Transportsicherungsöffnung 12 verbindet. Dadurch kann das zweite Sicherungselement einfacher eingesteckt werden.

Beispielsweise kann jedes Krafteinleitungsbauteil 5 zumindest ein Befestigungsloch 13 in der Höhenrichtung des Kettenglieds aufweisen. In der dargestellten Ausführungsform weist jedes Krafteinleitungsbauteil 5 zwei Befestigungslöcher 13 auf. Durch das Befestigungsloch 13 ist das Kettenglied 1 an den Plattenbändern des Plattenbandförderers 3 befestigbar. Beispielsweise kann jedes Krafteinleitungsbauteil 5 durch in der Höhenrichtung (y-Richtung) des Kettenglieds 1 durchgreifende (nicht dargestellte) Verbindungselemente, wie Schrauben, an den Plattenbändern befestigbar sein. In der dargestellten Ausführungsform weist das Befestigungsloch 13 einen rechteckigen Querschnitt auf, so dass eine formschlüssig gegen Verdrehen gesicherte Anbringung des Krafteinleitungsbauteils 5 über eine Schlossschraube (insbesondere in der Höhenrichtung (y-Richtung) von unten) möglich ist.

Vorzugsweise kann der (bzw. jeder) Abstandshalter 11 zumindest eine Befestigungsöffnung 14 aufweisen. In der dargestellten Ausführungsform weist der Abstandshalter 11 zwei Befestigungslöcher 14 auf. Die Befestigungsöffnung 14 kann vorzugsweise als ein Durchgangsloch ausgebildet sein. Die Befestigungsöffnung 14 kann mit dem Befestigungsloch 13 des Krafteinleitungsbauteils 5 fluchtend angeordnet sein. Ein Querschnitt der Befestigungsöffnung 14 kann zumindest so groß wie der Querschnitt des Befestigungslochs 13 des Krafteinleitungsbauteils 5 sein, vorzugsweise den gleichen Querschnitt aufweisen.

Vorzugsweise können die Seitenwände 4 und/oder die Krafteinleitungsbauteile 5 aus einem Stahl bestehen, der eine Materialfestigkeit von 700 N/mm² bis 1600 N/mm² besitzt.

Die beiden Seitenwände 4 eines Kettenglieds 1 können über zwei in Längsrichtung (z-Richtng) des Kettenglieds 1, beabstandete Verbindungselemente 15 fest miteinander verbunden sein. Insbesondere können die beiden Seitenwände des Kettenglieds 1 über Bolzen 16 oder Hülsen 17 miteinander verbunden sein. Dafür ist je Verbindungselement 15 in jeder Seitenwand 4 ein als Durchgangsloch ausgebildetes Verbindungsloch 18 ausgebildet. Die Öffnung 8 für die Aufnahme des Zapfens 7 ist vorzugsweise mittig zwischen den beiden Verbindungslöchern 18 angeordnet.

Zur Bildung der Laschenkette 2 ist eine Vielzahl von Kettengliedern 1 gelenkig miteinander verbunden. Dabei ist eine erste Anzahl der Kettenglieder 1 als Innenlaschen 19 ausgebildet und eine zweite Anzahl der Kettenglieder 1 als Außenlaschen 20 ausgebildet. Die Anzahl der Innenlaschen 19 entspricht der Anzahl der Außenlaschen 20. Die Innenlaschen 19 und die Außenlaschen 20 sind in einer Kettenumlaufrichtung abwechselnd angeordnet. Dabei sind in der Kettenumlaufrichtung benachbarte Innenlaschen 19 und Außenlaschen 20 gelenkig miteinander verbunden. Das heißt, dass die Laschenkette 2 eine Vielzahl von in Fig. 1 dargestellten Kettengliederpaaren/Laschenpaaren aus einer Innenlasche 19 und einer Außenlasche 20 aufgebaut ist.

Der Abstand (in x-Richtung) zwischen den Seitenwänden 4 einer als Innenlasche 19 ausgebildeten Kettenglied 1 ist geringer als der Abstand (in x-Richtung) zwischen den Seitenwänden 4 einer als Außenlasche 20 ausgebildeten Kettenglied 1. Insbesondere sind die Seitenwände 4 der Innenlaschen 19 in der Querrichtung (x-Richtung) zwischen den Seitenwänden 4 der Außenlaschen 20 angeordnet sind. Die in der Kettenumlaufrichtung benachbarten Kettenglieder 1 (d.h. jeweils eine Innenlasche 19 und eine Außenlasche 20) sind gelenkig miteinander verbunden, indem die Verbindungselemente 15 koaxial ineinander angeordnet sind. Da die als Innenlasche ausgebildeten Kettenglieder 1 vorzugsweise über die Hülsen 17 miteinander verbunden sein und die als Außenlaschen 20 ausgebildeten Kettenglieder 1 vorzugsweise über die Bolzen 16 miteinander verbunden sind, können die Bolzen 16 innerhalb der Hülsen 17 aufgenommen sein, so dass die beiden Kettenglieder 1 zueinander verschwenkbar um die Bolzen- bzw. Hülsenachse, aber in Längsrichtung miteinander verbunden sind.

Die Seitenwände 4 der Außenlaschen 20 und die Seitenwände 4 der Innenlaschen 19 können vorzugsweise im Wesentlichen den gleichen Aufbau haben, mit Ausnahme der Ausbildung der Verbindungslöcher 18. Die Krafteinleitungsbauteile 5 der Außenlaschen 20 und die Krafteinleitungsbauteile 5 der Innenlaschen 19 können vorzugsweise im Wesentlichen den gleichen Aufbau haben, mit Ausnahme der Länge der Krafteinleitungsbauteile 5, die bei den Innenlaschen 19 um so viel länger ist, wie die Seitenwände 4 der Innenlaschen 19 näher zueinander angeordnet sind. Zudem kann ein als Außenlasche 20 ausgebildetes Kettenglied 1 ein Konturmerkmal 21, beispielsweise in Form einer Kerbe in dem Krafteinleitungsbauteil 5, aufweisen, das an der Innenlasche 19 nicht ausgebildet ist, um eine Außenlasche 20 bzw. deren Krafteinleitungsbauteil 5 von der Innenlasche 19 bzw. deren Krafteinleitungsbauteil 5 unterscheiden zu können.

Fig. 5 zeigt eine Seitenansicht des Plattenbandförderers 3 und der Laschenkette 2. Der Plattenbandförderer 3 weist eine Vielzahl an Förderplatten 22 auf. Die Förderplatten 22 sind über die Laschenkette 3 in der Kettenumlaufrichtung antreibbar. Dabei sind die Kettenglieder 1 über die (nicht dargestellten) Verbindungselemente befestigt, welche die Krafteinleitungsbauteile 5 in der Höhenrichtung der Kettenglieder 1 durchgreifen. Zudem weist der Plattenbandförderer 3 nicht angetriebene Rollen 23 auf, über die das Gewicht des zu fördernden Schüttguts aufgenommen werden kann.

### Bezugszeichenliste

- 1: Kettenglied
- 2: Laschenkette
- 3: Plattenbandförderer
- 4: Seitenwand
- 5: Krafteinleitungsbauteil
- 6: Hauptkörper
- 7: Zapfen
- 8: Öffnung
- 9: Erste Transportöffnung
- 10: Erstes Sicherungselement
- 11: Abstandshalter
- 12: Zweite Transportöffnung
- 13: Befestigungsloch
- 14: Befestigungsöffnung
- 15: Verbindungselement
- 16: Bolzen
- 17: Hülse
- 18: Verbindungloch
- 19: Innenlasche
- 20: Außenlasche
- 21: Konturmerkmal
- 22: Förderplatte
- 23: Rolle

## Patentansprüche

1. Kettenglied (1) für eine Laschenkette (2) eines Kettenförderers (3), das Kettenglied (1) aufweisend:
- zwei im Wesentlichen plattenförmige Seitenwände (4),
- - die in einer Querrichtung (x-Richtung) des Kettenglieds (1) zueinander parallel beabstandet angeordnet und fest miteinander verbunden sind, und
- zwei Krafteinleitungsbauteile (5)
- - die zur Befestigung an einem Förderband des Kettenförderers (3) vorgesehen sind,
- - wobei jedes Krafteinleitungsbauteil (5) von der zugehörigen Seitenwand (4) in der Querrichtung (x-Richtung) der Laschenkette nach außen absteht
- als von den Seitenwänden (4) separates Bauteil ausgebildet ist, und jedes Krafteinleitungsbauteil (5) mit der zugehörigen Seitenwand (4) formschlüssig verbunden ist, **dadurch gekennzeichnet, dass** die zwei Krafteinleitungsbauteile im Wesentlichen plattenförmig sind.

2. Kettenglied (1) nach Anspruch 1, **dadurch gekennzeichnet, dass** die Seitenwände (4) des Kettengliedes (1) als Gleichteile ausgebildet sind.

3. Kettenglied (1) nach Anspruch 1 oder 2, **dadurch gekennzeichnet, dass** jedes Krafteinleitungsbauteil (5) einen Hauptkörper (6) und einen von dem Hauptkörper (6) abstehenden Zapfen (7) aufweist, wobei der Zapfen (7) des Krafteinleitungsbauteils (5) in eine Öffnung (8) in der zugehörigen Seitenwand (4) in der Querrichtung (x-Richtung) eingesteckt ist.

4. Kettenglied (1) nach Anspruch 3, **dadurch gekennzeichnet, dass** die beiden Krafteinleitungsbauteile (5) in zueinander entgegengesetzte Richtungen in die zugehörige Seitenwand (4) eingesteckt sind, wobei die beiden Krafteinleitungsbauteile (5) jeweils von außen in die zugehörige Seitenwand (4) eingesteckt sind.

5. Kettenglied (1) nach Anspruch 3 oder 4, **dadurch gekennzeichnet, dass** die Erstreckung der Öffnung (8) in einer Längsrichtung (z-Richtung) des Kettenglieds (1) im Wesentlichen der Breite des Zapfens (7) entspricht und/oder die Erstreckung der Öffnung (8) in einer Höhenrichtung (y-Richtung) des Kettenglieds (1) im Wesentlichen der Dicke des Zapfens (7) entspricht, wobei der Zapfen (7) und die Öffnung (8) so aufeinander abgestimmt sind, dass der Zapfen (7) werkzeuglos in die Öffnung (8) eingesteckt und aus der Öffnung (8) herausgezogen werden kann.

6. Kettenglied (1) nach einem der Ansprüche 3 bis 5, **dadurch gekennzeichnet, dass** in dem Zapfen (8) eine erste Transportsicherungsöffnung (9) ausgebildet ist, in die ein erstes Sicherungselement (10) zur temporären Befestigung des Krafteinleitungsbauteils (5) an der zugehörigen Seitenwand (4) so einsteckbar ist, dass das erste Sicherungselement (10) Material der zugehörigen Seitenwand (4) entgegen der Einsteckrichtung des Zapfens hintergreift.

7. Kettenglied (1) nach einem der Ansprüche 1 bis 6, **dadurch gekennzeichnet, dass** das Kettenglied (1) je Krafteinleitungsbauteil (5) einen Abstandshalter (11) aufweist, der auf dem Krafteinleitungsbauteil (5) aufliegt und bündig mit einer Oberkante der zugehörigen Seitenwand (4) in einer Höhenrichtung (y-Richtung) des Kettenglieds (1) abschließt und/oder eine äußerste Kante in y-Richtung des Kettenglieds (1) bildet.

8. Kettenglied (1) nach Anspruch 7, **dadurch gekennzeichnet, dass** der Abstandshalter (11) und das Krafteinleitungsbauteil (5) zueinander fluchtende zweite Transportsicherungsöffnungen (12) aufweist, in die ein zweites Sicherungselement zur temporären Befestigung des Abstandshalters (11) an dem Krafteinleitungsbauteil (5) einsteckbar ist.

9. Kettenglied (1) nach einem der Ansprüche 1 bis 8, **dadurch gekennzeichnet, dass** die Seitenwände (4) und/oder die Krafteinleitungsbauteile (5) aus einem Stahl bestehen, der eine Materialfestigkeit von 700 N/mm² bis 1600 N/mm² besitzt.

10. Laschenkette (2) für einen Kettenförderer (3), mit einer Vielzahl von Kettengliedern (1) nach einem der Ansprüche 1 bis 9, wobei eine erste Anzahl der Kettenglieder (1) als Innenlaschen (19) ausgebildet ist, eine zweite Anzahl der Kettenglieder (1) als Außenlaschen (20) ausgebildet ist, die Innenlaschen (19) und die Außenlaschen (20) in einer Kettenumlaufrichtung abwechselnd angeordnet sind, in der Kettenumlaufrichtung benachbarte Innenlaschen (19) und Außenlaschen (20) gelenkig miteinander verbunden sind, und die Seitenwände (4) der Innenlaschen (19) in der Querrichtung (x-Richtung) zwischen den Seitenwänden (4) der Außenlaschen (20) angeordnet sind.

11. Kettenförderer (3), insbesondere Plattenbandförderer, mit einer Laschenkette (2) nach Anspruch 10 und einer Vielzahl an Förderplatten (22), die über die Laschenkette (2) in der Kettenumlaufrichtung antreibbar sind, wobei die Förderplatten an den Kettengliedern (1) über die Krafteinleitungsbauteile (5) befestigt sind.

## Claims

1. A chain link (1) for a plate link chain (2) of a chain conveyor (3), the chain link (1) comprising:
- two essentially plate-shaped side walls (4),
- which are arranged parallel to one another at a distance in a transverse direction (x-direction) of the chain link (1) and are firmly connected to one another, and
- two load-introduction components (5)
- - which are intended for attachment to a conveyor belt of the chain conveyor (3),
- - wherein each load-introduction component (5) projects outwards from the associated side wall (4) in the transverse direction (x-direction) of the plate link chain
- is designed as a component separate from the side walls (4), and each load-introduction component (5) is positively connected to the associated side wall (4), **characterized in that** the two load-introduction components are is essentially plate-shaped.

2. The chain link (1) according to claim 1, **characterized in that** the side walls (4) of the chain link (1) are designed as identical parts.

3. The chain link (1) according to claim 1 or 2, **characterized in that** each load-introduction component (5) has a main body (6) and a pin (7) projecting from the main body (6), the pin (7) of the load-introduction component (5) being inserted into an opening (8) in the associated side wall (4) in the transverse direction (x-direction).

4. The chain link (1) according to claim 3, **characterized in that** the two load-introduction components (5) are inserted into the associated side wall (4) in opposite directions to one another, the two load-introduction components (5) each being inserted into the associated side wall (4) from the outside.

5. The chain link (1) according to claim 3 or 4, **characterized in that** the extent of the opening (8) in a longitudinal direction (z-direction) of the chain link (1) essentially corresponds to the width of the pin (7) and/or the extent of the opening (8) in a vertical direction (y-direction) of the chain link (1) essentially corresponds to the thickness of the pin (7), wherein the pin (7) and the opening (8) are matched to one another in such a way that the pin (7) can be inserted into the opening (8) and pulled out of the opening (8) without tools.

6. The chain link (1) according to one of claims 3 to 5, **characterized in that** in the pin (8) a first transport securing opening (9) is formed into which a first securing element (10) for temporarily attaching the load-introduction component (5) to the associated side wall (4) can be inserted in such a way that the first securing element (10) engages behind material of the associated side wall (4) counter to the insertion direction of the pin.

7. The chain link (1) according to one of claims 1 to 6, **characterized in that** the chain link (1) has a spacer (11) for each load-introduction component (5), which spacer rests on the load-introduction component (5) and ends flush with an upper edge of the associated side wall (4) in a height direction (y-direction) of the chain link (1) and/or forms an outermost edge in the y-direction of the chain link (1).

8. The chain link (1) according to claim 7, **characterized in that** the spacer (11) and the load-introduction component (5) have second transport securing openings (12), which are aligned with one another and into which a second securing element can be inserted for temporary attachment of the spacer (11) to the load-introduction component (5).

9. The chain link (1) according to one of claims 1 to 8, **characterized in that** the side walls (4) and/or the load-introduction components (5) consist of a steel, which has a material strength of 700 N/mm2 to 1600 N/mm2.

10. The link plate chain (2) for a chain conveyor (3), having a plurality of chain links (1) according to one of claims 1 to 9, wherein a first number of the chain links (1) is designed as inner link plates (19), a second number of the chain links (1) is designed as outer link plates (20), the inner link plates (19) and the outer link plates (20) are arranged alternately in a chain travel direction, neighboring inner link plates (19) and outer link plates (20) are pivotally connected to one another in the chain travel direction, and the side walls (4) of the inner link plates (19) are arranged in the transverse direction (x-direction) between the side walls (4) of the outer link plates (20).

11. The chain conveyor (3), in particular a slat conveyor, with a link plate chain (2) according to claim 10, and a plurality of conveyor plates (22), which can be driven in the chain travel direction via the plate chain (2), the conveyor plates being attached to the chain links (1) via the load-introduction components (5).

## Revendications

1. Maillon de chaîne (1) pour une chaîne à maillons (2) d'un convoyeur à chaîne (3), le maillon de chaîne (1) comprenant :
- deux parois latérales (4) essentiellement en forme de plaques,
- qui sont agencées parallèlement l'une à l'autre dans une direction transversale (direction x) du maillon de chaîne (1) et sont reliées solidement entre elles, et
- deux composants de transmission de force (5)
- - qui sont prévus pour être fixés à une bande de convoyage du convoyeur à chaîne (3),
- - chaque composant de transmission de force (5) faisant saillie vers l'extérieur à partir de la paroi latérale (4) correspondante dans la direction transversale (direction x) de la chaîne à maillons
- et étant réalisé sous forme de composant séparé des parois latérales (4), et chaque composant de transmission de force (5) est relié par complémentarité de forme à la paroi latérale (4) correspondante, **caractérisé en ce que** les deux composants de transmission de force sont essentiellement en forme de plaques.

2. Maillon de chaîne (1) selon la revendication 1, **caractérisé en ce que** les parois latérales (4) du maillon de chaîne (1) sont conçues comme des pièces identiques.

3. Maillon de chaîne (1) selon la revendication 1 ou 2, **caractérisé en ce que** chaque composant de transmission de force (5) comprend un corps principal (6) et un tenon (7) faisant saillie du corps principal (6), le tenon (7) du composant de transmission de force (5) étant enfiché dans une ouverture (8) de la paroi latérale correspondante (4) dans la direction transversale (direction x).

4. Maillon de chaîne (1) selon la revendication 3, **caractérisé en ce que** les deux composants de transmission de force (5) sont enfichés dans des directions opposées l'une à l'autre dans la paroi latérale correspondante (4), les deux composants de transmission de force (5) étant chacun enfichés depuis l'extérieur dans la paroi latérale correspondante (4).

5. Maillon de chaîne (1) selon la revendication 3 ou 4, **caractérisé en ce que** l'extension de l'ouverture (8) dans une direction longitudinale (direction z) du maillon de chaîne (1) correspond essentiellement à la largeur du tenon (7) et/ou l'extension de l'ouverture (8) dans une direction de hauteur (direction y) du maillon de chaîne (1) correspond essentiellement à l'épaisseur du tenon (7), le tenon (7) et l'ouverture (8) étant adaptés l'un à l'autre de telle sorte que le tenon (7) peut être inséré dans l'ouverture (8) et retiré de l'ouverture (8) sans avoir à utiliser d'outil.

6. Maillon de chaîne (1) selon l'une des revendications 3 à 5, **caractérisé en ce qu'**une première ouverture de sécurité pour le transport (9) est formée dans le tenon (8), dans laquelle un premier élément de sécurité (10) destiné à la fixation temporaire du composant de transmission de force (5) sur la paroi latérale correspondante (4) peut être inséré de telle sorte que le premier élément de sécurité (10) s'engage derrière le matériau de la paroi latérale correspondante (4) dans le sens opposé à la direction d'insertion du tenon.

7. Maillon de chaîne (1) selon l'une des revendications 1 à 6, **caractérisé en ce que** le maillon de chaîne (1) comprend, pour chaque composant de transmission de force (5), une entretoise (11) qui repose sur le composant de transmission de force (5) et se termine à fleur d'un bord supérieur de la paroi latérale correspondante (4) dans une direction de hauteur (direction y) du maillon de chaîne (1) et/ou forme un bord le plus à l'extérieur dans la direction y du maillon de chaîne (1).

8. Maillon de chaîne (1) selon la revendication 7, **caractérisé en ce que** l'entretoise (11) et le composant de transmission de force (5) présentent des deuxièmes ouvertures de sécurité pour le transport (12) alignées l'une par rapport à l'autre, dans lesquelles un deuxième élément de sécurité peut être inséré pour fixer temporairement l'entretoise (11) au composant de transmission de force (5).

9. Maillon de chaîne (1) selon l'une des revendications 1 à 8, **caractérisé en ce que** les parois latérales (4) et/ou les composants de transmission de force (5) sont constitués d'un acier présentant une résistance mécanique comprise entre 700 N/mm² et 1600 N/mm².

10. Chaîne à maillons (2) pour un convoyeur à chaîne (3), comportant une pluralité de maillons de chaîne (1) selon l'une des revendications 1 à 9, un premier nombre de maillons de chaîne (1) étant réalisés sous forme de languettes intérieures (19), un deuxième nombre de maillons de chaîne (1) étant réalisés sous forme de languettes extérieures (20), les languettes intérieures (19) et les languettes extérieures (20) étant agencées en alternance dans une direction de circulation de la chaîne, les languettes intérieures (19) et les languettes extérieures (20) adjacentes dans le sens de circulation de la chaîne étant reliées entre elles de manière articulée, et les parois latérales (4) des languettes intérieures (19) étant agencées dans le sens transversal (sens x) entre les parois latérales (4) des languettes extérieures (20).

11. Convoyeur à chaîne (3), en particulier convoyeur à plaques, avec une chaîne à maillons (2) selon la revendication 10 et une pluralité de plaques de convoyage (22) qui peuvent être entraînées dans le sens de circulation de la chaîne par l'intermédiaire de la chaîne à maillons (2), les plaques de convoyage étant fixées aux maillons de chaîne (1) par l'intermédiaire des composants de transmission de force (5).
